# EUROPEAN PATENT SPECIFICATION

(11) **EP 3 106 359 B1**
(45) Date of publication and mention of the grant of the patent: **11.07.2018**
(21) Application number: 14882492.3
(22) Date of filing: 28.05.2014
(51) Int. Cl.: B60T 7/06, G05G 1/323

(54) **REARWARD MOVEMENT PREVENTING DEVICE OF PEDAL DEVICE FOR VEHICLE**
VORRICHTUNG ZUR RÜCKWÄRTSBEWEGUNGSVERHINDERUNG EINER PEDALVORRICHTUNG FÜR EIN FAHRZEUG
DISPOSITIF EMPÊCHANT UN MOUVEMENT VERS L'ARRIÈRE D'UN DISPOSITIF À PÉDALE POUR VÉHICULE

(30) Priority: 11.02.2014 JP 2014023931
(43) Date of publication of application: 21.12.2016
(73) Proprietor: Toyoda Iron Works Co., Ltd., Toyota-shi Aichi 471-8507 (JP)
(72) Inventor: TSUZUKI Hiroaki, Toyota-shi Aichi 471-8507 (JP); TSUGUMA Tomohiro, Toyota-shi Aichi 471-8507 (JP)
(74) Representative: TBK
(86) International application number: PCT/JP2014/064198
(87) International publication number: WO 2015/122028

(56) References cited:
- EP-A1- 1 323 602
- JP-A- 2003 191 829
- JP-A- 2005 324 663
- JP-A- 2006 103 501

## Description

### FIELD

The present invention relates to a rearward movement preventing device of pedal device for vehicle which suppresses that, when a dash panel is moved rearward to a driver's seat side, a tread portion of an operation pedal prevents movement to the driver's seat side.

### BACKGROUND

A rearward movement preventing device of pedal device for vehicle, the pedal device for vehicle including (a) a pedal bracket arranged to a dash panel, (b) an operation pedal pivotally disposed on the pedal bracket about an axis of a first supporting shaft, wherein a tread portion provided in a lower-end portion of the operation pedal is trod towards a front side of a vehicle as a tread operation of the operation pedal; and (c) an intermediate lever pivotally disposed on the pedal bracket about an axis of an second supporting shaft parallel to the first supporting shaft as well as connected to the operation pedal through a connecting link, wherein the intermediate lever displaces a predetermined output member to the vehicle front side by mechanically pivoting in an output direction in conjunction with the tread operation of the operation pedal, and (d) the rearward movement preventing device adapted to prevent the tread portion of the operation pedal from moving rearward to the driver's seat side when the dash panel is displaced rearward to the driver's seat side is known (cf. Patent Literature 1).

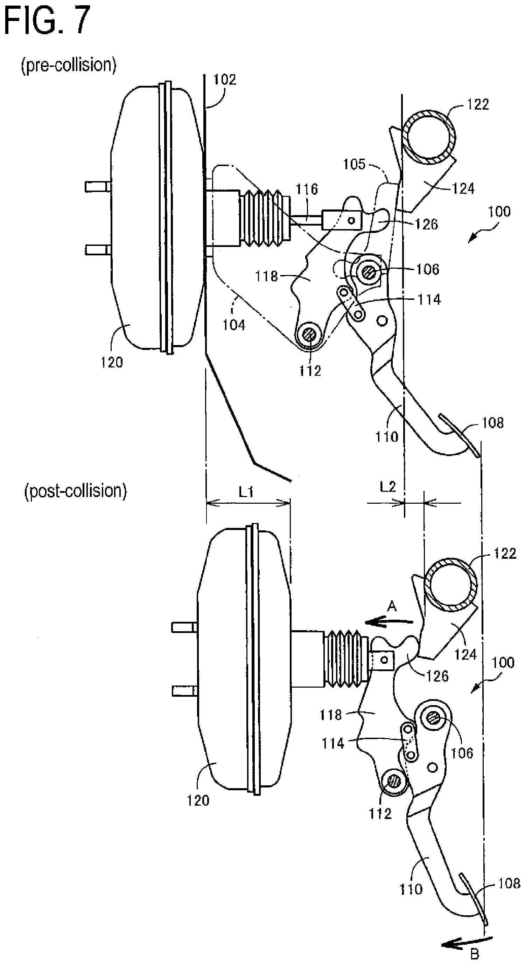

FIG. 7 illustrates an example of this rearward movement preventing device of pedal device for vehicle and relates to a vehicle brake pedal device 100. This brake pedal device 100 comprises (a) a first pedal bracket 104 arranged to a dash panel 102, (b) an operation pedal 110 pivotally disposed on the first pedal bracket 104 about an axis of a first supporting shaft 106, wherein a tread portion 108 disposed on its lower end is subjected to the tread operation to the vehicle front side, and (c) an intermediate lever 118 pivotally disposed on the first bracket 104 about an axis of a second supporting shaft 112 parallel to the first supporting shaft 106 as well as connected to an operation pedal 110 through a connecting link 114, wherein the intermediate lever 118 displaces an output member 116 which projects from the dash panel 102 to the vehicle front side by mechanically pivoting in the output direction in conjunction with the operation pedal 110. When the operation pedal 110 is subjected to the tread operation, the output member 116 is pushed into a brake booster 120 through the intermediate lever 118 by an operating rod of the brake booster 120. It should be noted that a second pedal bracket 105 is disposed on a vehicle body member 122 closer to the driver's seat side than the dash panel 102, such as an instrument panel reinforcement, and supports the first supporting member 106 with the first pedal bracket 104. That is, the first pedal bracket 104 and the second pedal bracket 105 are disposed in such a way that they are overlapped and jointed with each other on the opposing sides of the first supporting shaft 106 to support mutually.

In addition, a rearward movement preventing member 124 is provided on the vehicle body member 122 mentioned above. When a projection 126 of the intermediate lever 118 is contacted to the rearward movement preventing member 124 based on the difference between a rearward movement amount of the dash panel 102, L1 and that of the vehicle body member 122, L2 (L1>L2) in the vehicle collision, as shown by Arrow A in Fig. 7(b), the rearward movement preventing member 124 is pivoted relatively in the output direction in which the intermediate lever 118 presses the output member 116 (i.e., to the vehicle front side). In association with this pivot movement of the intermediate lever 118, the operating pedal 110 connected thereto through the connecting link 114 is pivoted in a direction of the tread operation as shown by Arrow B and the rearward movement of the tread portion 108 to the driver's seat side is suppressed.

Patent Document 2 discloses a rearward movement preventing device according to the preamble of independent claim 1.

### [Related Art]

### [Patent Document]

Patent Document 1: Japanese Laid-open Patent Publication No.2012-008698A1
Patent Document 2: JP 2006 103501 A

### SUMMARY

### PROBLEMS TO BE SOLVED BY THE INVENTION

However, this conventional rearward movement preventing device of pedal device for vehicle has been provided based on the fact that the output member 116 is pivoted relatively in the output direction during pressing it to the vehicle front side by contacting the intermediate lever 118 to the rearward movement preventing member 124. Thus, if the output member 116 can not be pushed into the brake booster 120 such as due to the deformation of each component in the collision, the intermediate lever 118 can not be pivoted in the output direction, so that the rearward movement preventing effect which suppresses the rearward movement of the tread portion 108 by pivoting the operating pedal 110 in the direction of tread operation may be not obtained appropriately.

The present invention is made based on the above background and directs to enable to obtain appropriately the rearward movement preventing effect which suppresses the rearward movement of the tread portion by pivoting the operating pedal in the direction of tread operation, even if the intermediate lever can not be pivoted in the output direction such as because the output member can not be pushed in.

### MEANS FOR SOLVING THE PROBLEMS

To achieve the above object, according to the first invention, a rearward movement preventing device of pedal device for vehicle that includes (a) a pedal bracket arranged to a dash panel, (b) an operation pedal pivotally disposed on the pedal bracket about an axis of a first supporting shaft, wherein a a tread portion provided in a lower-end portion of the operation pedal is trod towards a front side of a vehicle as a tread operation of the operation pedal; and (c) an intermediate lever pivotally disposed on the pedal bracket about an axis of an second supporting shaft parallel to the first supporting shaft as well as connected to the operation pedal through a connecting link, is characterized in that the intermediate lever displaces a predetermined output member to the vehicle front side by mechanically pivoting in an output direction in conjunction with the tread operation of the operation pedal, (d) the rearward movement preventing device adapted to prevent the tread portion of the operation pedal from moving rearward to the driver's seat side when the dash panel is displaced rearward to the driver's seat side, (e) the intermediate lever comprises a separating structure which mechanically separates an output connecting part connected to the output member from a lever body portion which is supported by the second supporting shaft as well as to which the connecting link is connected, and (f) a stopper portion is provided on an rearward movement preventing member supported by a vehicle body member closer to the driver's seat side than the dash panel, the stopper portion suppressing a rearward movement of the lever body portion by contacting the stopper portion to the lever body portion as the dash panel is moved rearward so as to separate the output connecting part by the separating structure, as well as pivoting the lever body portion relatively in the output direction and pivoting the operating pedal in a direction of the tread operation through the connecting link.

It should be noted that the abovementioned vehicle body member provided on closer to the driver's seat side than the dash panel. The vehicle body member includes an instrument panel reinforcement (a reinforcement member for the instrument panel), a cowl bracket or the like, and in general has less possibility to displace to the driver's seat side, i.e. the vehicle rear side, or less deformation amount comparing to the dash panel, when the great amount of load is input from the vehicle front side, such as in the collision. The present invention relates to the technique to suppress the retraction of the tread portion of the operating pedal based on the difference between the amounts of rearward movement.

According to the second invention, the rearward movement preventing device of pedal device for vehicle according to the first invention is characterized in that (a) the intermediate lever is provided with the output connecting part and the lever body portion which are provided independently and coupled with each other by a coupling member to integrally pivot about an axis of the second supporting shaft, and (b) the separating structure separates the output connecting part from the lever body portion by mechanically releasing a coupling through the coupling member.

According to the third invention, the rearward movement preventing device of pedal device for vehicle according to the first invention or second invention is characterized in that (a) the rearward movement preventing member is pivotally disposed about an axis of the first supporting shaft as well as locked at its tip portion to the vehicle body member, wherein, the rearward movement preventing member is pivoted about the axis of the first supporting shaft so as to displace the tip portion relatively to the vehicle front side as the dash panel is displaced rearward to the driver's seat side, and while, (b) the stopper portion is provided at a middle part between the first supporting shaft and a locking portion locked to the vehicle body member so that the reaction force applied on the point of effort due to the principle of leverage is amplified and applied on the lever body portion from the point of load, wherein the first supporting shaft act as the fulcrum point, the locking portion act as the point of effort and the stopper portion act as the point of load.

According to the fourth invention, the rearward movement preventing device of pedal device for vehicle according to any of the first to the third inventions is characterized in that the stopper portion is provided with a recess which is recessed in relation to the rear of the vehicle side in a direction parallel to the second supporting shaft, wherein the lever body portion is contacted an inside of the recess, in.

### EFFECTS OF THE INVENTION

In this rearward movement preventing device of pedal device for vehicle, the intermediate lever comprises the separating structure, and the output connecting part connected to the output member is adapted to separate from the lever body portion. Therefore, when the rearward movement of the lever body portion is suppressed by contacting the lever body portion to the stopper portion provided on the rearward movement preventing member as the dash panel is displaced rearward such as in the vehicle collision, in the case where the output member can not be displace relatively to the vehicle front side, the output connecting part is separated from the lever body portion by the separating structure mentioned above, and only the lever body portion is pivoted relatively in the output direction. However, in the case where the output member can be displaced relatively to the vehicle front side, the intermediate lever is still pivoted relatively in the output direction. That is, regardless whether or not the output member can be displace relatively to the vehicle front side, at lease the lever body portion of the intermediate lever is pivoted relatively in the output direction, and the operating pedal connected to the lever body portion through the connecting link is pivoted in the direction of tread operation so as to suppress the rearward movement of the tread portion, enabling that the rearward movement preventing effect can be stably obtained.

In the second invention, the output connecting part and the lever body portion are provided independently, and adapted to couple with each other by the coupling member to integrally pivot about the axis of the second supporting shaft. Since the coupling through the coupling member is mechanically released to separate the output connecting part from the lever body portion by contacting the lever body portion to the stopper portion such as in the vehicle collision, the separating strength of the output connecting part can be appropriately set depending on the coupling strength of the coupling member.

In the third invention, the rearward movement preventing member is pivotally disposed about the axis of the first supporting shaft as well as locked at its tip portion to the vehicle body member, and as the dash panel is displaced rearward to the driver's seat side. The rearward movement preventing member is pivoted about the axis of the first supporting shaft so as to displace the tip portion relatively to the vehicle front side, and while, since the stopper portion is provided at a middle part of the rearward movement preventing member, the pressing force applied on the lever body portion from the stopper portion (the point of load) with the locking portion locked to the vehicle body member acting as the point of effort is amplified due to the principle of leverage so as to appropriately suppress the rearward movement of the lever body portion, enabling the output connecting part to be separated.

In the fourth invention, since the lever body portion is contacted to the inside of the recess provided on the stopper portion, the lever body portion is positioned by the stopper portion regardless of the impact in the collision or like, so that the rearward movement of the lever body portion cab be appropriately suppressed.

### BRIEF DESCRIPTION OF DRAWINGS

[Fig. 1] A left side view illustrating a schematic configuration of a brake pedal device to which the present invention is applied.
[Fig. 2] An enlarged side view of II Section in Fig. 1, i.e. a main portion of a rearward movement preventing device in which an intermediate lever and an rearward movement preventing lever are disposed.
[Fig. 3] A rear view seen from the left side of Fig. 2, i.e. from a vehicle front side.
[Fig. 4] A cross sectional view taken along line IV-IV in Fig. 3.
[Fig. 5] A side view illustrating an initial collision state in which the intermediate lever is displaced rearward from its initial positon and an output connecting part is separated by the contact to a stopper portion in the example of the Fig. 1.
[Fig. 6] A side view illustrating a post-collision state in which, from the state in Fig. 5, a lever body portion of the intermediate lever is pivoted relatively in the output direction as well as an operating pedal is pivoted in the direction of the tread operation though a connecting link.
[Fig. 7] A comparative diagram between a pre-collision state and a post-collision state of a conventional rearward movement preventing device of the brake pedal device.

### DESCRIPTION OF THE EMBODIMENTS

The present invention is suitably applied to a vehicle pedal device in which an output member is disposed in such a way to project from a dash panel into a cabin and pivotally connected to an intermediate lever, such as a brake pedal device for a service brake in which an operating rod of a brake booster in an oil brake is connected as an output member to the intermediate lever, for example. Although a single pedal bracket may be simply fixed to the dash panel, it is desirable to attach pedal brackets across the dash panel and a vehicle body member closer to the driver's seat side than the dash panel. Two pedal brackets fixed to each of the dash panel and the vehicle body member may be integrally connected with each other by overlapping and jointing their portions on which a first supporting shaft and/or a second supporting shaft are disposed with each other.

The intermediate lever is disposed in a vertical direction for example, as well as pivotally disposed on the pedal bracket at its middle portion or lower end in the vertical direction so as to be connected to the output member at its upper portion to press to a vehicle front side. Although the intermediate lever is disposed closer to the vehicle front side than an operating pedal for example, the various aspects may be possible such as in which the intermediate lever is disposed above the operating pedal. Although this intermediate lever is contacted to a stopper portion provided on an rearward movement preventing member by substantially translating to a vehicle rear side with the bracket, for example as the dash panel is displaced rearward, the same is also true in the case where the intermediate lever is pivoted about the second supporting shaft through the output member in an opposing direction to the output direction. The behavior of the intermediate lever varies depending on the deformation manner of the pedal bracket or the like in the vehicle collision.

As a separating structure which separates an output connecting part from a lever body portion of the intermediate lever, the output connecting part and the lever body portion are provided independently for example, and configured to be coupled with each other by any coupling member to integrally pivot about an axis of the second supporting shaft. As the coupling member, for example, a bolt, a rivet or the like is suitably used, and the output connecting part is separated by fracturing the coupling member. Without using the coupling member, any weak portion such as a V-groove, a perforation and a slit, a cutout may be provided on the integrally configured intermediate lever to separate the output connecting part therefrom. Further, the various aspects may be possible such as in which, although friction materials or the like is employed as the coupling member mentioned above and in general the lever body portion and the output connecting part are integrally pivoted about the second supporting shaft, when the lever body portion is contacted to the stopper portion, the relative displacement such as the relative pivot movement is allowed against the friction force.

As the rearward movement preventing member, the pedal bracket which supports the first supporting shaft by being integrally fixed to the vehicle body member, the rearward movement preventing lever which is pivotally disposed about the first supporting shaft as well as suppresses the pivot movement to the vehicle rear side by contacting its tip portion to the vehicle body member and the like are suitably used. The various aspects may be possible such as in which the rearward movement preventing member is integrally fixed to vehicle body member simply. In the third invention, although the stopper portion is provided on the middle part of the rearward movement preventing member, it is desirable to provide the stopper portion closer to the first supporting shaft than the locking portion with the vehicle body member, so as to obtain the greater amplification effect. Although the stopper portion according to the fourth invention is provided with any recess such as a recessed groove, the recess does not necessarily need when the other invention is implemented.

### [Example]

An example of the present invention will be described below in detail with reference to the drawings.

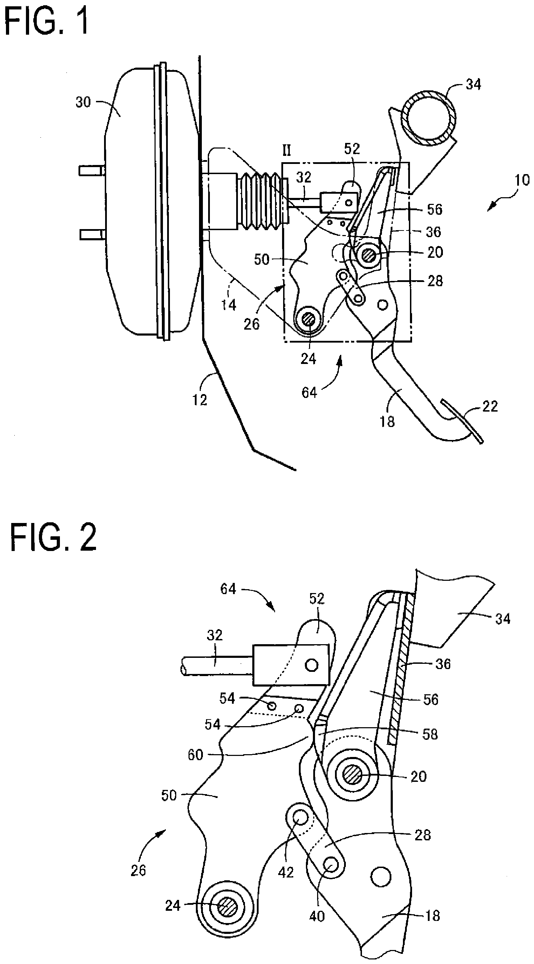

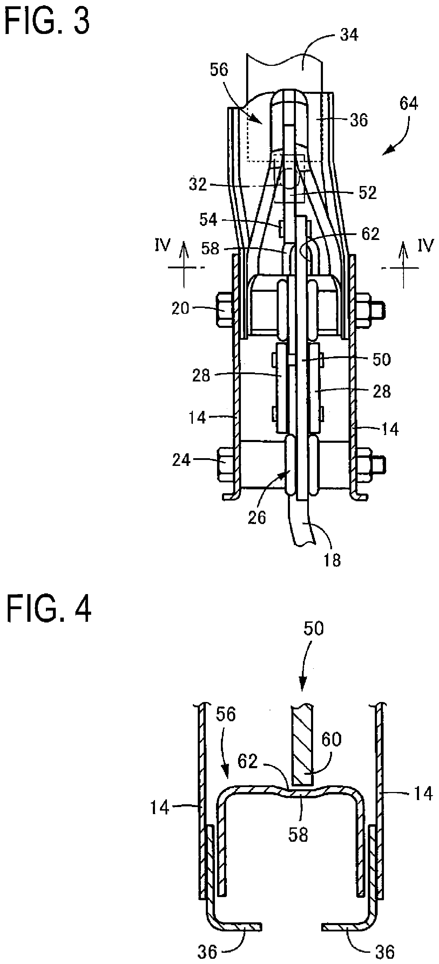

Fig. 1 is a left side view seen from the left side of a vehicle, illustrating a brake pedal device 10 for a service brake to which the present invention is applied, and Fig. 2 is an enlarged view of II Section in Fig. 1. Further, Fig. 3 is a rear view seen from the left side of Fig. 2, i.e. from a vehicle front side, and Fig. 4 is a cross sectional view taken along line IV-IV in Fig. 3. The brake pedal device 10 corresponds to the pedal device for vehicle, a first pedal bracket 14 is integrally fixed to a dash panel 12 which partitions between an engine compartment and a cabin, and an operating pedal 18 is pivotally disposed about a first supporting shaft 20 which is substantially horizontal and substantially parallel to a vehicle width direction. The operating pedal 18 is pivotally supported at its upper end about an axis of the first supporting shaft 20 and a tread portion 22 provided at its lower end is adapted to be subjected to a tread operation to a vehicle front side(in the left direction in Fig. 1). In Fig. 1, the first pedal bracket 14 is drawn by the imaginary line to see the inside structure.

On the first pedal bracket 14, also an intermediate lever 26 is pivotally disposed closer to the vehicle front side than the operating pedal 18 about a second supporting shaft 24 parallel to the first supporting shaft 20. The intermediate lever 26 is pivotally supported at its lower end about an axis of the second supporting shaft 24 with extending upward, and is connected to the operating pedal 18 through a connecting link 28 at its middle portion in the vertical direction. The connecting link 28 is relatively pivotally connected to the operating pedal 18 and the intermediate lever 26 at its opposing ends through a first connecting pin 40 and a second connecting pin 42 which are parallel to the first supporting shaft 20, respectively. An operating rod 32 of a brake booster 30 is connected to an upper end of the intermediate lever 26. The intermediate lever 26 presses the operating rod 32 forward by pivoting mechanically through the connecting link 28 in the counterclockwise direction (the output direction) relative to the second supporting shaft 24 in conjunction with the tread operation of the operating pedal 18, resulting in generating the braking force. The brake booster 30 is integrally fixed on the engine compartment side of the dash panel 12 and the operating rod 32 is disposed in such a way to project from the dash panel 12 into the cabin. The operating rod 32 corresponds to the output member.

A second pedal bracket 36 is integrally fixed to an instrument panel reinforcement 34 positioned closer to the driver's seat side than the dash panel 12. The second pedal bracket 36 is overlapped and jointed to the first pedal bracket 14 at the opposing sides of the first supporting shaft 20 by a bolt or the like, and the second pedal bracket 36 and the first pedal bracket 14 are integrally connected to support with each other. This results to ensure the predetermined strength or rigidity necessary for the pedal brackets. The instrument panel reinforcement 34 corresponds to the vehicle body member and in general has less possibility to displace to the driver's seat side, i.e. the vehicle rear side or less deformation amount comparing to the dash panel 12, when the great amount of load is inputted from the vehicle front side, such as in the collision.

The intermediate lever 26 is provided with a lever main body 50 pivotally supported by the second supporting shaft 24 and an output connecting member 52 to which the operating rod 32 is connected through a clevis, which are provided independently and overlapped and integrally coupled at an upper end of the lever main body 50 and a lower end of the output connecting member 52 by a plurality of fastener members 54 including bolts and nuts. The connecting link 28 is connected to the lever main body 50. Each of the fastener members 54 corresponds to the coupling member. In the regular braking operation, the lever main body 50 and the output connecting member 52 press the operating rod 32 to the vehicle front side by integrally pivoting about the second supporting shaft 24, but such as in the vehicle collision, upon applying a predetermined shearing load between the lever main body 50 and the output connecting member 52, the fastener members 54 are adapted to fracture so as to mechanically cut away the output connecting member 52 from the lever main body 50. That is, the intermediate lever 26 comprises the separating structure which allows the output connecting member 52 to be mechanically separated from the lever main body 50. The lever main body 50 corresponds to the lever body portion and the output connecting member 52 corresponds to the output connecting part.

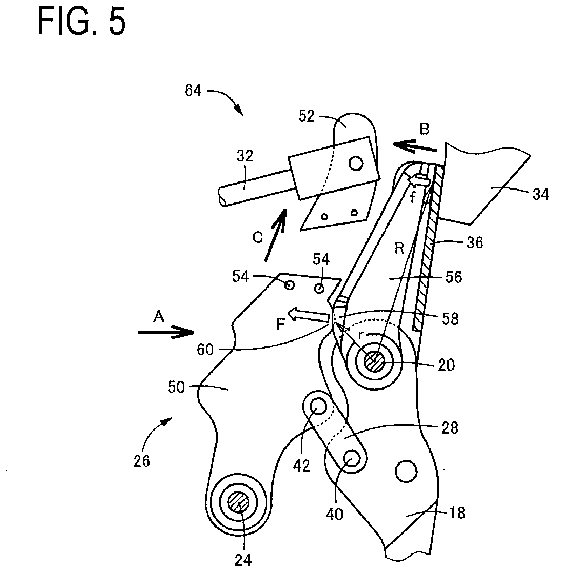

On the other hand, a rearward movement preventing lever 56 is pivotally disposed on the first supporting shaft 20. The rearward movement preventing lever 56 is pivotally supported at its lower end about the axis of the first supporting shaft 20 and held in the state in which the rearward movement preventing lever 56 can not pivot additionally in the clockwise direction, i.e. to the vehicle rear side by contacting its upper end directly or indirectly to the instrument panel reinforcement 34. The upper end may be fixed to the instrument panel reinforcement 34 or the second pedal bracket 36, as needed. This upper end corresponds to the locking portion. In addition, when the dash panel 12 is displaced rearward to the driver's seat side such as in the vehicle collision, and accordingly the first supporting shaft 20 and the second supporting shaft 24 are displaced rearward through the first pedal bracket 14 as shown in Fig. 5 by Arrow A, the rearward movement preventing lever 56 is pivoted counterclockwise about the first supporting shaft 20 as shown by Arrow B so as to displace the upper end relatively to the vehicle front side, based on the displacement relative to the instrument panel reinforcement 34.

The rearward movement preventing lever 56 mentioned above corresponds to the rearward movement preventing member and has a stopper portion 58 which contacts around an upper end of the lever main body 50 as the dash panel 12 is displaced rearward to the driver's seat side such as in the vehicle collision. In addition, when the lever main body 50 is relatively contacted to the stopper portion 58 in this way, any additional rearward movement of the lever main body 50 is suppressed and in the case where the operating rod 32 can not be displaced relatively to the vehicle front side, the excessive shearing stress affects the fastener members 54 to be fractured, so that the output connecting member 52 is separated from the lever main body 50 as shown in Fig. 5 by Arrow C. In the rearward movement preventing lever 56, and while the first supporting shaft 20 acts as the fulcrum point, the contact portion to the instrument panel reinforcement 34 acts as the point of effort, and the stopper portion 58 acts as the point of load, the stopper portion 58 is provided at the middle part between the fulcrum point and the point of effort, and Reaction Force f applied on the point of effort is amplified due to the principle of leverage, resulting Pressing Force F applied to the lever main body 50 from the point of load. In particular, in this example, since the position of the point of load is closer to the fulcrum point than the point of effort and Dimension r between the fulcrum point and the point of load is half or less of Dimension R between the fulcrum point and the point of effort, Pressing Force F is significantly amplified depending on their lever ratio (R/r), so that the output connecting member 52 can be surely separated by inhibiting the rearward movement of the lever main body 50 appropriately. An contacting portion 60 which expands in an arc shape toward the vehicle rear side, i.e. toward the rearward movement preventing lever 56, is provided around the upper end of the lever main body 50, and while the stopper portion 58 of the rearward movement preventing lever 56 is provided with a recessed groove 62 which is recessed in relation to the rear of the vehicle side in the horizontal direction parallel to the second supporting shaft 24 (see Fig. 4). The contacting portion 60 of the lever main body 50 is positioned in the recessed groove 62. Fig. 5 illustrates an initial collision state in which, the lever main body 50 contacts to the stopper portion 58 and the output connecting member 52 is separated from the lever main body 50. The recessed groove 62 mentioned above corresponds to the recess.

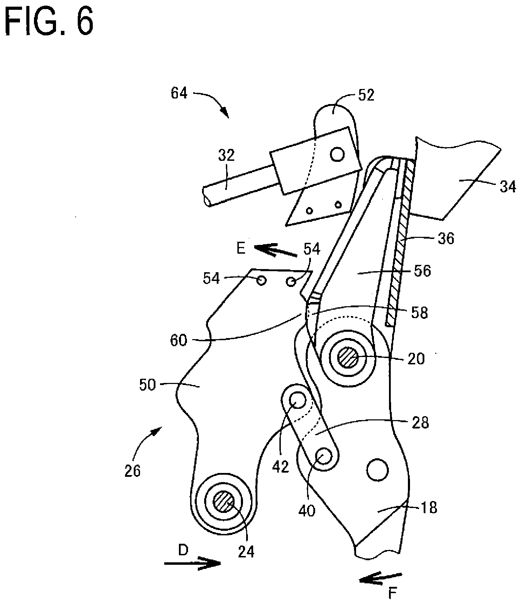

Thereafter, when the dash panel 12 is further displaced rearward to the driver's seat side, and the first supporting shaft 20 and the second supporting shaft 24 are further displaced rearward through the first pedal bracket 14 as shown in Fig. 6 by Arrow D, due to the contact to the stopper portion 58, the lever main body 50 of the intermediate lever 26 is pivoted relatively in the output direction, i.e. the counterclockwise direction about the second supporting shaft 24 as shown by Arrow E. In addition, the operating pedal 18 connected to the lever main body 50 through the connecting link 28 is pivoted in the direction of the tread operation as shown in Fig. 6 by Arrow F and the tread portion 22 of the operating pedal 18 is pivoted to the vehicle front side, so that the rearward movement to the driver's seat side is suppressed accordingly. In this example, a rearward movement preventing device 64 comprises the rearward movement preventing lever 56 which acts as the rearward movement preventing member, the intermediate lever 26 which can separate the output connecting member 52 therefrom, and the connecting link 28 etc.

It should be noted that even if a rearward movement amount of the first supporting shaft 20 supported by both of the first pedal bracket 14 and the second pedal bracket 36 is less than that of the second supporting shaft 24, the operation and effect equivalent to Figs. 5 and 6 can be obtained due to the engagement between the stopper portion 58 and the lever main body 50. In addition, in the case where, as the lever main body 50 is contacted to the stopper portion 58 and the intermediate lever 26 is pivoted relatively in the counterclockwise direction about the second supporting shaft 24, the operating rod 32 can be displaced relatively to the vehicle front side, the intermediate lever 26 is still pivoted in the counterclockwise direction about the second supporting shaft 24 during displacing the operating rod 32 relatively to the vehicle front side, so that the operating pedal 18 can be pivoted in the direction of the tread operation.

As described above, in the brake pedal device 10 of this example, the intermediate lever 26 comprises the separating structure, and the output connecting member 52 connected to the operating rod 32 can be separated from the lever main body 50. Therefore, when the rearward movement of the lever main body 50 is suppressed by contacting the lever main body 50 to the stopper portion 58 provided on the rearward movement preventing lever 56 as the dash panel 12 is displaced rearward such as in the vehicle collision, in the case where the operating rod 32 can not be displaced relatively to the vehicle front side, the fastener members 54 are fractured so that the output connecting member 52 is separated from the lever main body 50, and only the lever main body 50 is pivoted relatively in the output direction. On the other hand, in the case where the operating rod 32 can be displaced relatively to the vehicle front side, the output connecting member 52 is not separated and the intermediate lever 26 is still pivoted relatively in the output direction. That is, regardless whether or not the operating rod 32 can be displaced relatively to the vehicle front side, at least the lever main body 50 of the intermediate lever 26 is pivoted relatively in the output direction, and the operating pedal 18 connected to the lever main body 50 through the connecting link 28 is pivoted in the direction of the tread operation so as to suppress the rearward movement of the tread portion 22, enabling that the rearward movement preventing effect can be stably obtained.

Further, in the intermediate lever 26, the lever main body 50 and the output connecting member 52 are provided independently and adapted to be coupled with each other by the fastener members 54 so as to integrally pivot about the axis of the second supporting shaft 24. Since the fastener members 54 are fractured by contacting the lever main body 50 to the stopper portion 58 such as in the vehicle collision so that the output connecting member 52 is separated from the lever main body 50, the separating strength of the output connecting member 52 can be appropriately set depending on the coupling strength resulted from such as the thickness or number of the fastener members 54.

In addition, the rearward movement preventing lever 56 is pivotally disposed about the axis of the first supporting shaft 20 as well as is contacted at its tip portion to the instrument panel reinforcement 34, as the dash panel 12 is displaced rearward to the driver's seat side, the rearward movement preventing lever 56 is pivoted about the axis of the first supporting shaft 20 so as to displace its tip portion relatively to the vehicle front side. While, since the stopper portion 58 is provided on the middle part of the rearward movement preventing lever 56, Pressing Force F by the stopper portion 58 is amplified due to the principle of leverage, so that the output connecting member 52 can be separated by suppressing appropriately the rearward movement of the lever main body 50.

Further, since the lever main body 50 is contacted to the inside of the recessed groove 62 provided on the stopper portion 58, the lever main body 50 is positioned by the stopper portion 58 regardless of the impact in the collision or the like, so that the rearward movement of the lever main body 50 can be appropriately suppressed.

Although the example of the present invention has been described in detail with reference to the drawings, it is a simple embodiment and the present invention can be implemented in various modified or improved aspects based on the knowledge of the person skilled in the art.

### [Reference Signs]

- 10:: brake pedal device (vehicle pedal device)
- 12:: dash panel
- 14:: first pedal bracket
- 18:: operating pedal
- 20:: first supporting shaft
- 22:: tread portion
- 24:: second supporting shaft
- 26:: intermediate lever
- 28:: connecting link
- 32:: operating rod (output member)
- 34:: instrument panel reinforcement (vehicle body member)
- 36:: second pedal bracket
- 50:: lever main body (lever body portion)
- 52:: output connecting member (output connecting part)
- 54:: fastener member (coupling member)
- 56:: rearward movement preventing lever (rearward movement preventing member)
- 58:: stopper portion
- 62:: recessed groove (recess)

## Claims

1. A rearward movement preventing device of pedal device (10) for vehicle that includes
a pedal bracket (14) arranged to a dash panel (12),
an operation pedal (18) pivotally disposed on the pedal bracket (14) about an axis of a first supporting shaft (20), wherein a tread portion (22) provided in a lower-end portion of the operation pedal (18) is trod towards a front side of a vehicle as a tread operation of the operation pedal (18); and
an intermediate lever (26) arranged to the pedal bracket (14) pivotally about an axis of an second supporting shaft (24) parallel to the first supporting shaft (20) as well as connected to the operation pedal (18) through a connecting link (28), wherein the intermediate lever (26) displaces a predetermined output member (32) to the vehicle front side by mechanically pivoting in an output direction in conjunction with the tread operation of the operation pedal (18),
the rearward movement preventing device adapted to prevent the tread portion (22) of the operation pedal (18) from moving rearward to the driver's seat side when the dash panel (12) is displaced rearward to the driver's seat side, **characterizing in that**
the intermediate lever (26) comprises a separating structure which mechanically separates an output connecting part (52) connected to the output member (32) from a lever body portion (50) which is supported by the second supporting shaft (24) as well as to which the connecting link (28) is connected, and
a stopper portion (58) is provided on an rearward movement preventing member (56) supported by a vehicle body member (34) closer to the driver's seat side than the dash panel (12), the stopper portion (58) suppressing a rearward movement of the lever body portion (50) by contacting the stopper portion (58) to the lever body portion (50) as the dash panel (12) is moved rearward so as to separate the output connecting part (52) by the separating structure, as well as pivoting the lever body portion (50) relatively in the output direction and pivoting the operating pedal in a direction of the tread operation through the connecting link (28).

2. The rearward movement preventing device of pedal device (10) for vehicle according to claim 1, wherein
the intermediate lever (26) is provided with the output connecting part (52) and the lever body portion (50) which are provided independently and coupled with each other by a coupling member (50) to integrally pivot about an axis of the second supporting shaft (24), and
the separating structure separates the output connecting part (52) from the lever body portion (50) by mechanically releasing a coupling through the coupling member (50).

3. The rearward movement preventing device of pedal device (10) for vehicle according to claim 1 or 2, wherein
the rearward movement preventing member (56) is pivotally disposed about an axis of the first supporting shaft (20) as well as locked at its tip portion to the vehicle body member (34), wherein, the rearward movement preventing member (56) is pivoted about the axis of the first supporting shaft (20) so as to displace the tip portion relatively to the vehicle front side as the dash panel (12) is displaced rearward to the driver's seat side, and while,
the stopper portion (58) is provided at a middle part between the first supporting shaft (20) and a locking portion locked to the vehicle body member (34) so that the reaction force applied on the point of effort due to the principle of leverage is amplified and applied on the lever body portion (50) from the point of load, wherein the first supporting shaft (20) act as the fulcrum point, the locking portion act as the point of effort and the stopper portion (58) act as the point of load.

4. The rearward movement preventing device of pedal device (10) for vehicle according to any one of claims 1 to 3, wherein
the stopper portion (58) is provided with a recess (62) which is recessed in relation to the rear of the vehicle side in a direction parallel to the second supporting shaft (24), wherein the lever body portion (50) is contacted an inside of the recess (62).

## Patentansprüche

1. Rückwärtsbewegungsverhinderungsvorrichtung einer Pedalvorrichtung (10) für ein Fahrzeug, die Folgendes enthält:
einen Pedalhalter (14), der an einem Armaturenträger (12) angeordnet ist,
ein Betätigungspedal (18), das an dem Pedalhalter (14) um eine Achse einer ersten Stützwelle (20) schwenkbar angeordnet ist, wobei ein Trittabschnitt (22), der in einem unteren Endabschnitt des Betätigungspedals (18) vorgesehen ist, in Richtung einer Vorderseite eines Fahrzeugs als eine Trittbetätigung des Betätigungspedals (18) getreten wird; und
einen Zwischenhebel (26), der an dem Pedalhalter (14) schwenkbar um eine Achse einer zweiten Stützwelle (24), die parallel zu der ersten Stützwelle (20) ist, angeordnet sowie mit dem Betätigungspedal (18) über ein Verbindungsglied (28) verbunden ist, wobei der Zwischenhebel (26) ein vorbestimmtes Bauteil (32) durch ein mechanisches Schwenken in einer Ausgaberichtung in Verbindung mit der Trittbetätigung des Betätigungspedals (18) an die Fahrzeugvorderseite verlagert,
wobei die Rückwärtsbewegungsverhinderungsvorrichtung angepasst ist, um den Trittabschnitt (22) des Betätigungspedals (18) daran zu hindern, sich rückwärts zu der Fahrersitzseite zu bewegen, wenn der Armaturenträger (12) rückwärts zu der Fahrersitzseite verlagert wird, **dadurch gekennzeichnet, dass**
der Zwischenhebel (26) eine Trennstruktur aufweist, die ein Ausgabeverbindungsteil (52), das mit dem Ausgangsbauteil (32) verbunden ist, von einem Hebelkörperabschnitt (50) mechanisch trennt, der durch die zweite Stützwelle (24) gestützt sowie mit dem Verbindungsglied (28) verbunden ist, und
ein Anschlagabschnitt (58) an einem Rückwärtsbewegungsverhinderungsbauteil (56) vorgesehen ist, das näher an der Fahrersitzseite als der Armaturenträger (12) durch ein Fahrzeugkarosseriebauteil (34) gestützt ist, wobei der Anschlagabschnitt (58) eine Rückwärtsbewegung des Hebelkörperabschnitts (50) durch ein Kontaktieren des Anschlagabschnitts (58) an dem Hebelkörperabschnitt (50) unterdrückt, wenn der Armaturenträger (12) rückwärts bewegt wird, um das Ausgabeverbindungsteil (52) durch die Trennstruktur zu trennen, sowie den Hebelkörperabschnitt (50) in der Ausgaberichtung relativ schwenkt und das Betätigungspedal in einer Richtung der Trittbetätigung über das Verbindungsglied (28) schwenkt.

2. Rückwärtsbewegungsverhinderungsvorrichtung einer Pedalvorrichtung (10) für ein Fahrzeug gemäß Anspruch 1, wobei
der Zwischenhebel (26) mit dem Ausgabeverbindungsteil (52) und dem Hebelkörperabschnitt (50) versehen ist, die unabhängig vorgesehen sind und durch ein Kopplungsbauteil (50) miteinander gekoppelt sind, um einstückig um eine Achse der zweiten Stützwelle (24) zu schwenken, und
die Trennstruktur das Ausgabeverbindungsteil (52) von dem Hebelkörperabschnitt (50) durch ein mechanisches Freigeben einer Kopplung durch das Kopplungsbauteil (50) trennt.

3. Rückwärtsbewegungsverhinderungsvorrichtung einer Pedalvorrichtung (10) für ein Fahrzeug gemäß Anspruch 1 oder 2, wobei
das Rückwärtsbewegungsverhinderungsbauteil (56) um eine Achse der ersten Stützwellen (20) schwenkbar angeordnet sowie an dessen Spitzenabschnitt an dem Fahrzeugkarosseriebauteil (34) verriegelt ist, wobei das Rückwärtsbewegungsverhinderungsbauteil (56) um die Achse der ersten Stützwellen (20) geschwenkt wird, um den Spitzenabschnitt relativ zu der Fahrzeugvorderseite zu verlagern, wenn der Armaturenträger (12) rückwärts zu der Fahrersitzseite verlagert wird, und während
der Anschlagabschnitt (58) an einem Mittelteil zwischen der ersten Stützwelle (20) und einem Verriegelungsabschnitt, der an dem Fahrzeugkarosseriebauteil (34) verriegelt ist, vorgesehen ist, sodass die Reaktionskraft, die an dem Angriffspunkt aufgebracht wird, aufgrund des Prinzips einer Hebelwirkung verstärkt wird und auf den Hebelkörperabschnitt (50) von dem Lastpunkt aufgebracht wird, wobei die erste Stützwellen (20) als der Gelenkpunkt fungiert, wobei der Verriegelungsabschnitt als der Angriffspunkt fungiert und der Anschlagabschnitt (58) als der Lastpunkt fungiert.

4. Rückwärtsbewegungsverhinderungsvorrichtung einer Pedalvorrichtung (10) für ein Fahrzeug gemäß einem der Ansprüche 1 bis 3, wobei
der Anschlagabschnitt (58) mit einer Vertiefung (62) versehen ist, die in Bezug auf die Rückseite der Fahrzeugseite in einer Richtung parallel zu der zweiten Stützwelle (24) vertieft ist, wobei der Hebelkörperabschnitt (50) eine Innenseite der Vertiefung (62) kontaktiert.

## Revendications

1. Dispositif empêchant un mouvement vers l'arrière de dispositif à pédale (10) pour véhicule qui inclut
un support de pédale (14) agencé sur un tableau de bord (12),
une pédale d'actionnement (18) disposée de manière pivotante sur le support de pédale (14) autour d'un axe d'un premier arbre de support (20), dans lequel une portion d'enfoncement (22) disposée dans une portion d'extrémité inférieure de la pédale d'actionnement (18) est enfoncée vers un côté avant d'un véhicule comme action d'enfoncement de la pédale d'actionnement (18) ; et
un levier intermédiaire (26) agencé sur le support de pédale (14) de manière pivotante autour d'un axe d'un deuxième arbre de support (24) parallèlement au premier arbre de support (20) ainsi que relié à la pédale d'actionnement (18) par le biais d'un maillon de liaison (28), dans lequel le levier intermédiaire (26) déplace un élément de sortie prédéterminé (32) vers le côté avant de véhicule en pivotant mécaniquement dans une direction de sortie conjointement avec l'action d'enfoncement de la pédale d'actionnement (18),
le dispositif empêchant un mouvement vers l'arrière adapté pour empêcher la portion d'enfoncement (22) de la pédale d'actionnement (18) de se déplacer vers l'arrière vers le côté siège du conducteur quand le tableau de bord (12) est déplacé vers l'arrière vers le côté siège du conducteur, **caractérisé en ce que**
le levier intermédiaire (26) comprend une structure de séparation qui sépare mécaniquement une partie de liaison de sortie (52) reliée à l'élément de sortie (32) d'une portion de corps de levier (50) qui est supportée par le deuxième arbre de support (24) auquel est également relié le maillon de liaison (28), et
une portion de butée (58) est disposée sur un élément empêchant un mouvement vers l'arrière (56) supporté par un élément de carrosserie de véhicule (34) plus près du côté siège du conducteur que le tableau de bord (12), la portion de butée (58) supprimant un mouvement vers l'arrière de la portion de corps de levier (50) en mettant en contact la portion de butée (58) avec la portion de corps de levier (50) quand le tableau de bord (12) est déplacé vers l'arrière de manière à séparer la partie de liaison de sortie (52) par la structure de séparation, ainsi qu'en faisant pivoter la portion de corps de levier (50) relativement dans la direction de sortie et pivoter la pédale d'actionnement dans une direction de l'opération d'enfoncement par le biais du maillon de liaison (28).

2. Dispositif empêchant un mouvement vers l'arrière de dispositif à pédale (10) pour véhicule selon la revendication 1, dans lequel
le levier intermédiaire (26) est pourvu de la partie de liaison de sortie (52) et de la portion de corps de levier (50) qui sont disposées indépendamment et couplées entre elles par un élément de couplage (50) afin de pivoter d'un seul tenant autour d'un axe du deuxième arbre de support (24), et
la structure de séparation sépare la partie de liaison de sortie (52) de la portion de corps de levier (50) en libérant mécaniquement un couplage par le biais de l'élément de couplage (50).

3. Dispositif empêchant un mouvement vers l'arrière de dispositif à pédale (10) pour véhicule selon la revendication 1 ou 2, dans lequel
l'élément empêchant un mouvement vers l'arrière (56) est disposé de manière pivotante autour d'un axe du premier arbre de support (20) ainsi que verrouillé au niveau de sa portion de pointe sur l'élément de corps de carrosserie (34), dans lequel l'élément empêchant un mouvement vers l'arrière (56) est pivoté autour de l'axe du premier arbre de support (20) de manière à déplacer la portion de pointe relativement vers le côté avant de véhicule quand le tableau de bord (12) est déplacé vers l'arrière vers le côté siège du conducteur, et en même temps,
la portion de butée (58) est disposée au niveau d'une partie centrale entre le premier arbre de support (20) et une portion de verrouillage verrouillée sur l'élément de carrosserie de véhicule (34) de telle sorte que la force de réaction appliquée sur le point d'effort en raison du principe de l'effet levier est amplifiée et appliquée sur la portion de corps de levier (50) depuis le point de charge, dans lequel le premier arbre de support (20) sert de point d'appui, la portion de verrouillage sert de point d'effort et la portion de butée (58) sert de point de charge.

4. Dispositif empêchant un mouvement vers l'arrière de dispositif à pédale (10) pour véhicule selon l'une quelconque des revendications 1 à 3, dans lequel
la portion de butée (58) est pourvue d'un renfoncement (62) qui est enfoncé par rapport à l'arrière du côté de véhicule dans une direction parallèle au deuxième arbre de support (24), dans lequel la portion de corps de levier (50) est en contact avec un intérieur du renfoncement (62).
